# EUROPEAN PATENT APPLICATION

(11) **EP 4 615 153 A1**
(43) Date of publication of application: **10.09.2025**
(21) Application number: 22964170.9
(22) Date of filing: 11.11.2022
(51) Int. Cl.: H04W 76/28

(54) **TIMER STARTING METHOD AND APPARATUS**

(30) Priority: 02.11.2022 WO PCT/CN2022/129357
(71) Applicant: Beijing Xiaomi Mobile Software Co., Ltd., Beijing 100085 (CN)
(72) Inventor: JIANG, Xiaowei, Beijing 100085 (CN)
(74) Representative: Hersina, Günter
(86) International application number: PCT/CN2022/131500
(87) International publication number: WO 2024/092870

(57) **Abstract**

Disclosed in the embodiments of the present disclosure are a timer starting method and apparatus, which can be applied to the technical field of communications. The method, which is executed by means of an Internet-of-Things terminal device, comprises: determining a starting moment of a DRX inactivity timer according to transmission time information and a first duration of a PDSCH, a PUSCH or a PDCCH; and starting the DRX inactivity timer at the starting moment. By means of the method, a starting moment of a DRX inactivity timer and a starting moment for monitoring a PDCCH are overlapped as much as possible, so that it is ensured that an Internet-of-Things terminal device can reliably monitor the PDCCH, thereby improving the reliability of an Internet-of-Things communication system.

## Description

### CROSS-REFERENCE TO RELATED APPLICATION

This application is based on and claims priority to International application PCT/CN2022/109357 filed on November 2, 2022, the entire contents of which are incorporated herein by reference.

### TECHNICAL FIELD

The present disclosure relates to the field of communication technologies, and in particular relates to a method and an apparatus for starting a timer.

### BACKGROUND

At present, it is agreed in a relevant communication protocol that only one hybrid automatic repeat request (HARQ) process or more than one HARQ process is configured for an Internet of Things (IoT) terminal. For the case where only one HARQ process is configured, it is agreed in the protocol that a discontinuous reception inactivity timer (DRX inactivity timer) is started in a subframe where a last repetition of a physical downlink shared channel (PDSCH) or physical uplink shared channel (PUSCH) transmission is located. For the case where more than one HARQ process is configured, if a new transmission indicated by a physical downlink control channel (PDCCH) is received, the DRX inactivity timer will also be started immediately.

However, for a narrow band Internet of Things (NB-IoT) terminal, it is also agreed in the protocol that the NB-IoT terminal does not monitor the narrow band PDCCH within 12 milliseconds (ms) after the reception of the narrow band PDSCH ends, that is, does not start the DRX inactivity timer. This conflicts with the start timing of the DRX inactivity timer in the above agreement.

### SUMMARY

Embodiments of the present disclosure provide a method and an apparatus for starting a timer.

Embodiments of a first aspect of the present disclosure provide a method for starting a timer, performed by an IoT terminal and including: determining a start moment of a discontinuous transmission (DRX) inactivity timer according to a first duration and transmission time information of a physical downlink shared channel (PDSCH), a physical uplink shared channel (PUSCH), or a physical downlink control channel (PDCCH); and starting the DRX inactivity timer at the start moment.

In the present disclosure, the IoT terminal determines the start moment of the DRX inactivity timer according to the transmission time information of the PDSCH, PUSCH or PDCCH and the first duration, and then starts the DRX inactivity timer at the start moment of the DRX inactivity timer. Therefore, by configuring the start moment of the DRX inactivity timer to overlap with the start moment of monitoring the PDCCH as much as possible, it is ensured that the IoT terminal can reliably monitor the PDCCH, thereby improving the reliability of the IoT communication system.

Embodiments of a second aspect of the present disclosure provide a method for starting a timer, performed by a network device and including: determining a start moment of a discontinuous transmission (DRX) inactivity timer in an IoT terminal according to a first duration and transmission time information of a physical downlink shared channel (PDSCH), a physical uplink shared channel (PUSCH), or a physical downlink control channel (PDCCH).

Embodiments of a third aspect of the present disclosure provide a communication device, which includes a processing module configured to determine a start moment of a discontinuous transmission (DRX) inactivity timer according to a first duration and transmission time information of a physical downlink shared channel (PDSCH), a physical uplink shared channel (PUSCH), or a physical downlink control channel (PDCCH), in which the processing module is further configured to start the DRX inactivity timer at the start moment.

Embodiments of a fourth aspect of the present disclosure provide a communication device, which includes a processing module configured to determine a start moment of a discontinuous transmission (DRX) inactivity timer in an IoT terminal according to a first duration and transmission time information of a physical downlink shared channel (PDSCH), a physical uplink shared channel (PUSCH), or a physical downlink control channel (PDCCH).

Embodiments of a fifth aspect of the present disclosure provide a communication device, which includes a processor and a memory having stored therein a computer program. The processor executes the computer program stored in the memory, so that the communication device performs the method for starting the timer described above in the embodiments of the first aspect.

Embodiments of a sixth aspect of the present disclosure provide a communication device, which includes a processor and a memory having stored therein a computer program. The processor executes the computer program stored in the memory, so that the communication device performs the method for starting the timer described above in the embodiments of the second aspect.

Embodiments of a seventh aspect of the present disclosure provide a communication device, which includes a processor and an interface circuit configured to receive code instructions and transmit the code instructions to the processor, in which the processor is configured to run the code instructions to cause the communication device to execute the method for starting the timer described above in the embodiments of the first aspect.

Embodiments of an eighth aspect of the present disclosure provide a communication device, which includes a processor and an interface circuit configured to receive code instructions and transmit the code instructions to the processor, in which the processor is configured to run the code instructions to cause the communication device to execute the method for starting the timer described above in the embodiments of the second aspect.

Embodiments of a ninth aspect of the present disclosure provide a communication system. The communication system includes the communication device described in the third aspect and the communication device described in the fourth aspect, or the communication system includes the communication device described in the fifth aspect and the communication device described in the sixth aspect, or the communication system includes the communication device described in the seventh aspect and the communication device described in the eighth aspect, or the communication system includes the communication device described in the ninth aspect and the communication device described in the tenth aspect.

Embodiments of a tenth aspect of the present disclosure provide a computer-readable storage medium for storing instructions that, when executed, cause the method for starting the timer described above in the embodiments of the first aspect to be implemented.

Embodiments of an eleventh aspect of the present disclosure provide a computer-readable storage medium for storing instructions that, when executed, cause the method for starting the timer described above in the embodiments of the second aspect to be implemented.

Embodiments of a twelfth aspect of the present disclosure provide a computer program product that, when run on a computer, causes the computer to execute the method for starting the timer described above in the embodiments of the first aspect.

Embodiments of a thirteenth aspect of the present disclosure provide a computer program product that, when run on a computer, causes the computer to execute the method for starting the timer described above in the embodiments of the second aspect.

In a fourteenth aspect, the present disclosure provides a chip system, which includes at least one processor and an interface, configured to support a first access and mobility management function (AMF) to implement the functions involved in the first aspect, for example, determining or processing at least one of data and information involved in the above method. In a possible design, the chip system further includes a memory, which is configured to store desired computer programs and data for the terminal. The chip system may be composed of a chip, or may include a chip and other discrete devices.

In a fifteenth aspect, the present disclosure provides a chip system, which includes at least one processor and an interface, configured to support a terminal to implement the functions involved in the first aspect, for example, determining or processing at least one of data and information involved in the above method. In a possible design, the chip system further includes a memory, which is configured to store desired computer programs and data for the terminal. The chip system may be composed of a chip, or may include a chip and other discrete devices.

In a sixteenth aspect, the present disclosure provides a computer program that, when run on a computer, causes the computer to perform the method described above in the first aspect.

In a seventeenth aspect, the present disclosure provides a computer program that, when run on a computer, causes the computer to perform the method described above in the second aspect.

Additional aspects and advantages of the present disclosure will be given in part in the following description, become apparent in part from the following description, or be learned from the practice of the present disclosure.

### BRIEF DESCRIPTION OF THE DRAWINGS

In order to more clearly illustrate the technical solutions in the embodiments of the present disclosure or the background, the drawings used in the embodiments of the present disclosure or the background will be described below.
FIG. 1 is a schematic diagram of an architecture of a communication system provided in an embodiment of the present disclosure.
FIG. 2 is a schematic flowchart of a method for starting a timer provided in an embodiment of the present disclosure.
FIG. 3 is a schematic flowchart of another method for starting a timer provided in an embodiment of the present disclosure.
FIG. 4 is a schematic flowchart of another method for starting a timer provided in an embodiment of the present disclosure.
FIG. 5 is a schematic flowchart of another method for starting a timer provided in an embodiment of the present disclosure.
FIG. 6 is a schematic flowchart of another method for starting a timer provided in an embodiment of the present disclosure.
FIG. 7 is a schematic flowchart of yet another method for starting a timer provided in an embodiment of the present disclosure.
FIG. 8 is a schematic block diagram of a communication device provided in an embodiment of the present disclosure.
FIG. 9 is a schematic block diagram of another communication device provided in an embodiment of the present disclosure.
FIG. 10 is a schematic block diagram of a chip provided in an embodiment of the present disclosure.

### DETAILED DESCRIPTION

For the ease of understandings, the terms involved in the present disclosure are first introduced.

### 1. Physical downlink shared channel (PDSCH)

PDSCH is mainly used for transmission of downlink unicast data, and may also be used for transmission of paging messages and system messages.

### 2. Physical uplink shared channel (PUSCH)

An uplink physical channel corresponding to a PDSCH is used to transmit uplink service data and can also be used to carry uplink control information (UCI).

### 3. Physical downlink control channel (PDCCH)

The PDCCH transmits downlink control information (DCI) related to a PUSCH/PDSCH. The DCI includes several related contents such as resource block (RB) allocation information and HARQ identifiers. Only when the terminal correctly decodes the DCI, can it correctly process PDSCH data or PUSCH data.

### 4. Hybrid automatic repeat request (HARQ)

HARQ is a new communication technology based on forward error correction (FEC) and automatic retransmission (ARQ) developed to better resist interference and fading and improve system throughput (effectiveness) and data transmission reliability.

### 5. HARQ feedback disabling

HARQ feedback disabling means that after receiving an HARQ, a receiver does not need to feed back an HARQ acknowledgment (ACK) message or an HARQ negative acknowledgement (NACK) message to a transmitter.

### 6. Narrow band Internet of Things (NB-IoT)

NB-IoT is an emerging technology in the IoT field that supports cellular data connections for low power devices in wide area networks, also known as low power wide area networks (LPWAN).

### 7. Enhanced machine type communication (eMTC)

eMTC, also known as LTE-machine to machine (LTE-M), is an IoT technology based on the evolution of LTE.

### 8. Discontinuous reception (DRX)

The basic mechanism of DRX is to configure a DRX cycle for a terminal in a radio resource control (RRC) connection state. The DRX cycle consists of an "awake period (On Duration)" and a "sleep period (Opportunity for DRX)". During the "On Duration" period, the terminal monitors and receives a PDCCH. During the "Opportunity for DRX" period, the terminal does not receive the PDCCH to reduce power consumption.

### 9. Discontinuous reception inactivity timer (DRX inactivity timer)

If new uplink or downlink data need to be transmitted during the On Duration period, the DRX inactivity timer is started to indicate a duration during which the terminal needs to continue monitoring the PDCCH. Whenever there is new data to be scheduled, the timer will be started (or restarted). The function of the DRX inactivity timer is to reduce the data processing delay.

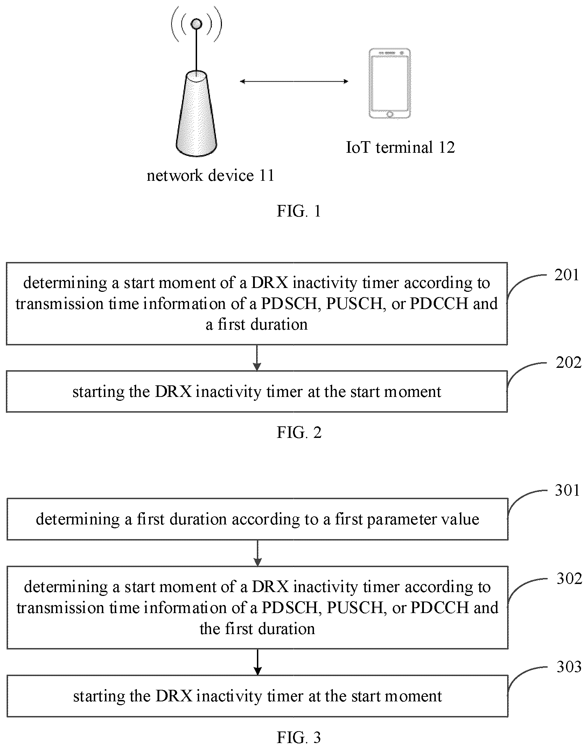

Reference is made to FIG. 1, which is a schematic diagram of the architecture of a communication system provided in an embodiment of the present disclosure. The communication system may include, but is not limited to, one network device and one terminal. The number and form of devices shown in FIG. 1 are only used as examples and do not constitute a limitation on the embodiments of the present disclosure. In actual applications, two or more network devices and two or more terminals may be included. The communication system shown in FIG. 1 includes, for example, one network device 11 and one IoT terminal 12.

It should be noted that the technical solution in this embodiment of the present disclosure may be applied to various communication systems, such as a long term evolution (LTE) system, a fifth generation (5G) mobile communication system, a 5G new radio (NR) system, or other new future mobile communication systems.

Optionally, the network device 11 in the communication system is an entity on the network side for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and specific device form adopted by the network device are not limited in the embodiments of the present disclosure. The network device provided in an embodiment of the present disclosure may include a central unit (CU) and a distributed unit (DU), in which the CU may also be referred to as a control unit. The CU-DU structure may be used to split the protocol layer of the network device, such as the base station, and the functions of some protocol layers are placed in the CU for centralized control, and the functions of some or all of the remaining protocol layers are distributed in the DU, and the DU is centrally controlled by the CU.

The IoT terminal 12 in an embodiment of the present disclosure is an entity on the user side for receiving or transmitting signals. The IoT terminal may also be referred to as a terminal device, a user equipment (UE), a mobile station (MS), a mobile terminal (MT), etc. The IoT terminal may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the present disclosure.

It may be understood that the communication system described in this embodiment of the present disclosure is for the purpose of more clearly illustrating the technical solution of the embodiments of the present disclosure, and does not constitute a limitation on the technical solution provided in the embodiments of the present disclosure. Those of ordinary skill in the art may know that with the evolution of the system architecture and the emergence of new business scenarios, the technical solution provided in the embodiments of the present disclosure is also applicable to similar technical problems.

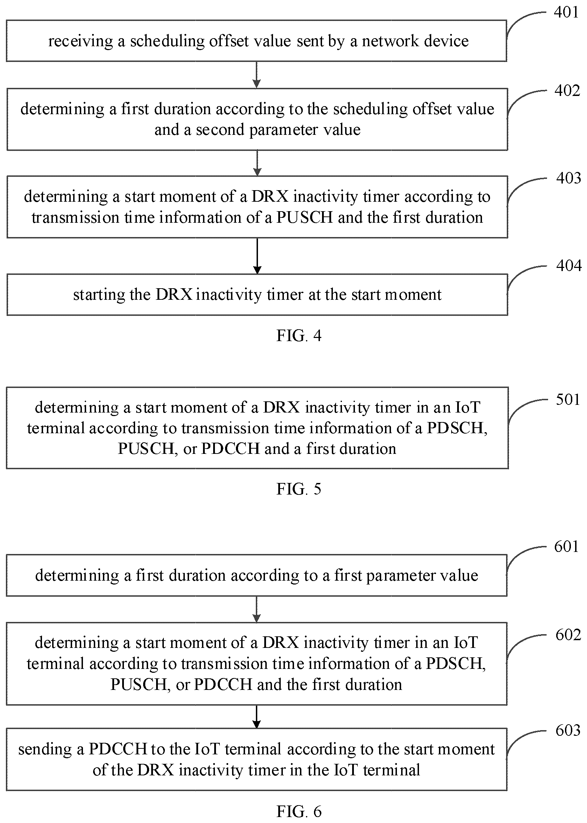

In this communication system, the IoT terminal 12 can implement the method shown in any embodiment of FIGS. 2 to 4 of the present disclosure, and the network device 11 can implement the method shown in any embodiment of FIGS. 5 to 7 of the present disclosure.

It may be understood that the communication system described in this embodiment of the present disclosure is for the purpose of more clearly illustrating the technical solution of the embodiments of the present disclosure, and does not constitute a limitation on the technical solution provided in the embodiments of the present disclosure. Those of ordinary skill in the art may know that with the evolution of the system architecture and the emergence of new business scenarios, the technical solution provided in the embodiments of the present disclosure is also applicable to similar technical problems.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly the second information may also be referred to as the first information, without departing from the scope of the embodiments of the present disclosure. As used herein, the term "in response to determining" may be construed to mean "when" or "upon" or "if" depending on the context. For the purpose of brevity and ease of understandings, the terms used in this document to represent size relationships are "greater than" or "less than", or "higher than" or "lower than". However, it may be understood by those skilled in the art that the term "greater than" also covers the meaning of "greater than or equal to", and the term "less than" also covers the meaning of "less than or equal to"; and the term "higher than" covers the meaning of "higher than or equal to", and the term "lower than" also covers the meaning of "lower than or equal to".

The present disclosure mainly aims at the problem that the start timing of the DRX inactivity timer in NB-IoT agreed in the relevant protocol conflicts with the monitoring timing of the PDCCH, which may cause the start timing of the DRX inactivity timer to be advanced, and indirectly lead to a shortened time for the IoT terminal to monitor the narrow band PDCCH. A method for determining the start moment of the DRX inactivity timer according to the transmission time information of the PDSCH, PUSCH or PDCCH and the first duration is provided, thereby ensuring that the start timing of the DRX inactivity timer can meet the requirement that the IoT terminal can reliably monitor the PDCCH and thus improving the reliability of the IoT communication system.

It should be noted that the term "repetition" in "multiple repetitions", "last repetition", and the like in the present disclosure refers to "repeated transmission" or "retransmission". For example, "a subframe occupied by a last repetition in multiple repetitions of a PDSCH transmission" can also be described as "a subframe occupied by a last retransmission in multiple retransmissions of a PDSCH transmission" or the like.

The method for starting the timer provided in the embodiments of the present disclosure is described in detail below in conjunction with the flowcharts.

Reference is made to FIG. 2, which is a schematic flowchart of a method for starting a timer provided in an embodiment of the present disclosure. The method provided in this embodiment may be performed by an IoT terminal. As shown in FIG. 2, the method may include, but is not limited to, the following steps.

At step 201, a start moment of a DRX inactivity timer is determined according to transmission time information of a PDSCH, PUSCH, or PDCCH and a first duration.

Optionally, the start moment of the DRX inactivity timer may be determined according to the transmission time information of the PDSCH and the first duration, or the start moment of the DRX inactivity timer may be determined according to the transmission time information of the PUSCH and the first duration, or the start moment of the DRX inactivity timer may be determined according to the transmission time information of the PDCCH and the first duration.

At step 202, the DRX inactivity timer is started at the start moment.

The transmission time information may be used to indicate the time domain position of a subframe occupied by a last repetition in multiple repetitions of a PDSCH transmission. Alternatively, the transmission time information may be used to indicate the time domain position of a subframe occupied by a last repetition in multiple repetitions of a PUSCH transmission, or the transmission time information may be used to indicate the time domain position occupied by a PDCCH transmission. For example, the transmission time information may be a start or end moment of the subframe occupied by the last repetition in multiple repetitions of the PDSCH/PUSCH transmission, or a start or end moment of a time domain resource occupied by the PDCCH transmission, which is not limited in the present disclosure. In addition, the first duration may be a duration determined by the IoT terminal according to a protocol agreement, or may be a duration indicated by the network device to the IoT terminal, which is not limited in the present disclosure.

Optionally, in a case where the IoT terminal is configured with one downlink (DL) HARQ process and an HARQ feedback is disabled, a moment after the first duration has passed after a subframe occupied by a last repetition in multiple repetitions of a PDSCH transmission is received is determined as the start moment of the DRX inactivity timer.

Alternatively, in a case where the IoT terminal is configured with one DL HARQ process and an HARQ feedback is disabled, a moment after the first duration has passed after a subframe occupied by a last retransmission in multiple retransmissions of a PDSCH transmission is received is determined as the start moment of the DRX inactivity timer.

That is, the start moment of the DRX inactivity timer = the subframe occupied by the last repetition (retransmission) in multiple repetitions (retransmissions) of the PDSCH transmission + *T. T* is the first duration, which may be any integer or decimal greater than or equal to 0, such as 0ms, 1ms, 3.5ms, 4ms, 5ms, 7.6ms, 10ms, 12ms, 13ms, or the like.

Optionally, in a case where the IoT terminal is configured with one uplink (UL) HARQ process and the UL HARQ is in a first mode, a moment after the first duration has passed after a subframe occupied by a last repetition in multiple repetitions of a PUSCH transmission is sent is determined as the start moment of the DRX inactivity timer.

Alternatively, in a case where the IoT terminal is configured with one UL HARQ process and the UL HARQ is in a first mode, a moment after the first duration has passed after a subframe occupied by a last retransmission in multiple retransmissions of a PUSCH transmission is sent is determined as the start moment of the DRX inactivity timer.

The first mode may be mode B. In the mode B, the network device does not schedule retransmissions based on the decoding result of the PUSCH data, that is, the network device does not need to wait for receiving the PUSCH to schedule retransmissions. Therefore, in the present disclosure, the DRX inactivity timer may be started after the first duration has passed after the PUSCH is sent, to monitor the PDCCH.

That is, the start moment of the DRX inactivity timer = the subframe occupied by the last repetition (retransmission) in multiple repetitions (retransmissions) of the PUSCH transmission + *T. T* is the first duration, which may be any integer or decimal greater than or equal to 0, such as 0ms, 1ms, 3.5ms, 4ms, 5ms, 7.6ms, 10ms, 12ms, 13ms, or the like.

Optionally, when the network device configures a scheduling offset value for the terminal, the first duration may also be determined according to the scheduling offset value. The scheduling offset value is a frame timing value used by the network device when a downlink and an uplink are not aligned. Optionally, the scheduling offset value may be a Kmac parameter in RRC configuration parameters. For example, the first duration = the scheduling offset value + *a,* where *a* may be any integer or decimal greater than or equal to 0, for example, *a* may be 0, 1, 1.8, 2, 2.4, 3, or the like, which is not limited in the present disclosure. Alternatively, in a case where the IoT terminal is configured with multiple DL HARQ processes, a moment after the first duration has passed after a new DL transmission indicated by the PDCCH is received is determined as the start moment of the DRX inactivity timer; or in a case where the IoT terminal is configured with multiple UL HARQ processes, a moment after the first duration has passed after a new UL transmission indicated by the PDCCH is received is determined as the start moment of the DRX inactivity timer. That is, in case that the NB-IoT or eMTC terminal is configured with multiple DL HARQ processes, then after receiving the new DL/UL transmission indicated by the PDCCH, the NB-IoT or eMTC terminal may start the DRX inactivity timer after the first duration to monitor the new PDCCH.

In the present disclosure, the IoT terminal determines the start moment of the DRX inactivity timer according to the transmission time information of the PDSCH, PUSCH or PDCCH and the first duration, and then starts the DRX inactivity timer at the start moment of the DRX inactivity timer. Therefore, by configuring the start moment of the DRX inactivity timer to overlap with the start moment of monitoring the PDCCH as much as possible, it is ensured that the IoT terminal can reliably monitor the PDCCH, thereby improving the reliability of the IoT communication system.

Reference is made to FIG. 3, which is a schematic flowchart of another method for starting a timer provided in an embodiment of the present disclosure. The method provided in this embodiment may be performed by an IoT terminal. As shown in FIG. 3, the method may include, but is not limited to, the following steps.

At step 301, a first duration is determined according to a first parameter value.

The first parameter value is a numerical value used to determine the start moment of the DRX inactivity timer in an auxiliary IoT terminal. The first parameter value may be any numerical value that ensures that the IoT terminal can reliably monitor the PDCCH after the start moment of the DRX inactivity timer is delayed by the first duration determined based on the first parameter value. The first parameter value may be a fixed value, such as 12ms; or the first parameter value may be any value within a certain value range, for example, the first parameter value is any value in {0, 1, 2, 2.8, 3, 3.6, 4, ..., 13}, which is not limited in the present disclosure.

Optionally, the first duration may be the same as the first parameter value, or the first duration may have a fixed relationship with the first parameter value, for example, the first duration is 1.5 times, 2 times, or the like as large as the first parameter value, which is not limited in the present disclosure.

Optionally, the IoT terminal may determine the first parameter value according to a protocol agreement, or determine the first parameter value according to an indication of a network device.

For example, the IoT terminal may receive the first parameter value sent by the network device via a broadcast message or an RRC message, which is not limited in the present disclosure.

At step 302, a start moment of a DRX inactivity timer is determined according to transmission time information of a PDSCH, PUSCH, or PDCCH and the first duration.

At step 303, the DRX inactivity timer is started at the start moment.

Concerning the specific implementation of the above steps 302 to 303, reference may be made to the detailed description of any embodiment in the present disclosure, which will not be repeated here.

In the present disclosure, the IoT terminal first determines the first duration according to the first parameter value, and then determines that the start moment of the DRX inactivity timer is a moment located after a subframe occupied by the last repetition in multiple repetitions of the PDSCH/PUSCH transmission and after the first duration, or a moment located after a new transmission indicated by the PDCCH is received and after the first duration has passed. Therefore, by configuring the start moment of the DRX inactivity timer to overlap with the start moment of monitoring the PDCCH as much as possible, it is ensured that the IoT terminal can reliably monitor the PDCCH, thereby improving the reliability of the IoT communication system.

Reference is made to FIG. 4, which is a schematic flowchart of another method for starting a timer provided in an embodiment of the present disclosure. The method provided in this embodiment may be performed by an IoT terminal. As shown in FIG. 4, the method may include, but is not limited to, the following steps.

At step 401, a scheduling offset value sent by a network device is received.

The scheduling offset value is a frame timing value used by the network device when a downlink and an uplink are not aligned. Optionally, the scheduling offset value may be a Kmac parameter in RRC configuration parameters.

Optionally, the IoT terminal may receive the scheduling offset value sent by the network device via an RRC message, which is not limited in the present disclosure.

At step 402, a first duration is determined according to the scheduling offset value and a second parameter value.

The second parameter value is a numerical value used to determine the start moment of the DRX inactivity timer in an auxiliary IoT terminal together with the scheduling offset value. The second parameter value may be any value that ensures that the IoT terminal can reliably monitor the PDCCH after the start moment of the DRX inactivity timer is delayed by the first duration determined based on the second parameter value and the scheduling offset value. The second parameter value may be a fixed value, such as 3; or the second parameter value may be any value within a certain value range, for example, the second parameter value may be any value in {0, 1, 1.5, 2, 2.8, 3, 4, ...}, which is not limited in the present disclosure.

Optionally, the first duration = the scheduling offset value + the second parameter value.

In some possible implementations, in case that the value of the scheduling offset value + the second parameter value is a non-integer, then the first duration may also be a value obtained by rounding up or down the value of "the scheduling offset value + the second parameter value". In order to avoid as much as possible that the start moment of the DRX inactivity timer is earlier than the start moment of monitoring the PDCCH by the IoT terminal, in the present disclosure, the value of "the scheduling offset value + the second parameter value" rounded up may be determined as the first duration. For example, in case that the scheduling offset value + the second parameter value = 3.5, then the first duration may be determined to be 4.

At step 403, a start moment of a DRX inactivity timer is determined according to transmission time information of a PUSCH and the first duration.

At step 404, the DRX inactivity timer is started at the start moment.

Concerning the specific implementation of the above steps 403 to 404, reference may be made to the detailed description of any embodiment in the present disclosure, which will not be repeated here.

It should be noted that since the scheduling offset value is the frame timing value determined by the network device after receiving the uplink data, the IoT terminal can determine the start moment of the DRX inactivity timer after the PUSCH transmission based on the first duration determined according to the scheduling offset value.

That is, in case that the IoT terminal has received the scheduling offset value, then after the transmission of a frame where the last repetition in multiple repetitions of the PUSCH transmission is located, the DRX inactivity timer may be started after the first duration to monitor the PDCCH.

In the present disclosure, when receiving the scheduling offset value, the IoT terminal first determines the first duration according to the second parameter value and the scheduling offset value, and then determines that the start moment of the DRX inactivity timer is a moment located after the subframe occupied by the last repetition in multiple repetitions of the PUSCH transmission and after the first duration. Therefore, by configuring the start moment of the DRX inactivity timer to overlap with the start moment of monitoring the PDCCH as much as possible, it is ensured that the IoT terminal can reliably monitor the PDCCH, thereby improving the reliability of the IoT communication system.

Reference is made to FIG. 5, which is a schematic flowchart of another method for starting a timer provided in an embodiment of the present disclosure. The method provided in this embodiment is performed by a network device. As shown in FIG. 5, the method may include, but is not limited to, the following steps.

At step 501, a start moment of a DRX inactivity timer in an IoT terminal is determined according to transmission time information of a PDSCH, PUSCH, or PDCCH and a first duration.

Optionally, the start moment of the DRX inactivity timer may be determined according to the transmission time information of the PDSCH and the first duration, or the start moment of the DRX inactivity timer may be determined according to the transmission time information of the PUSCH and the first duration, or the start moment of the DRX inactivity timer may be determined according to the transmission time information of the PDCCH and the first duration.

The transmission time information may be used to indicate the time domain position of a subframe occupied by a last repetition in multiple repetitions of a PDSCH transmission. Alternatively, the transmission time information may be used to indicate the time domain position of a subframe occupied by a last repetition in multiple repetitions of a PUSCH transmission, or the transmission time information may be used to indicate the time domain position occupied by a PDCCH transmission. For example, the transmission time information may be a start or end moment of the subframe occupied by the last repetition in multiple repetitions of the PDSCH/PUSCH transmission, or a start or end moment of a time domain resource occupied by the PDCCH transmission, which is not limited in the present disclosure.

In addition, the first duration may be a duration determined by the network device according to a protocol agreement, which is not limited in the present disclosure.

Optionally, in a case where the IoT terminal is configured with one downlink (DL) HARQ process and an HARQ feedback is disabled, a moment after the first duration has passed after a subframe occupied by a last repetition in multiple repetitions of a PDSCH transmission is received is determined as the start moment of the DRX inactivity timer.

Alternatively, in a case where the IoT terminal is configured with one DL HARQ process and an HARQ feedback is disabled, a moment after the first duration has passed after a subframe occupied by a last retransmission in multiple retransmissions of a PDSCH transmission is received is determined as the start moment of the DRX inactivity timer.

That is, the start moment of the DRX inactivity timer = the subframe occupied by the last repetition (retransmission) in multiple repetitions (retransmissions) of the PDSCH transmission + *T. T* is the first duration, which may be any integer or decimal greater than or equal to 0, such as 0ms, 1ms, 3.5ms, 4ms, 5ms, 7.6ms, 10ms, 12ms, 13ms, or the like.

Optionally, in a case where the IoT terminal is configured with one uplink (UL) HARQ process and the UL HARQ is in a first mode, a moment after the first duration has passed after a subframe occupied by a last repetition in multiple repetitions of a PUSCH transmission is sent is determined as the start moment of the DRX inactivity timer.

Alternatively, in a case where the IoT terminal is configured with one UL HARQ process and the UL HARQ is in a first mode, a moment after the first duration has passed after a subframe occupied by a last retransmission in multiple retransmissions of a PUSCH transmission is sent is determined as the start moment of the DRX inactivity timer.

The first mode may be mode B. In the mode B, the network device does not schedule retransmissions based on the decoding result of the PUSCH data, that is, the network device does not need to wait for receiving the PUSCH to schedule retransmissions. Therefore, in the present disclosure, the network device may determine that the DRX inactivity timer in the IoT terminal may be started after the first duration has passed after the PUSCH is sent. The network device can send the PDCCH to the IoT terminal at the start moment of the DRX inactivity timer or after the DRX inactivity timer is started, thereby ensuring that the IoT terminal can reliably monitor the PDCCH.

That is, the start moment of the DRX inactivity timer = the subframe occupied by the last repetition (retransmission) in multiple repetitions (retransmissions) of the PUSCH transmission + *T. T* is the first duration, which may be any integer or decimal greater than or equal to 0, such as 0ms, 1ms, 3.5ms, 4ms, 5ms, 7.6ms, 10ms, 12ms, 13ms, or the like.

Optionally, when the network device configures a scheduling offset value for the terminal, the first duration may also be determined according to the scheduling offset value. The scheduling offset value is a frame timing value used by the network device when a downlink and an uplink are not aligned. Optionally, the scheduling offset value may be a Kmac parameter in RRC configuration parameters.

For example, the first duration = the scheduling offset value + *a,* where *a* may be any integer or decimal greater than or equal to 0, for example, *a* may be 0, 1, 1.8, 2, 2.4, 3, or the like, which is not limited in the present disclosure.

Alternatively, in a case where the IoT terminal is configured with multiple DL HARQ processes, a moment after the first duration has passed after a new DL transmission indicated by the PDCCH is received is determined as the start moment of the DRX inactivity timer; or in a case where the IoT terminal is configured with multiple UL HARQ processes, a moment after the first duration has passed after a new UL transmission indicated by the PDCCH is received is determined as the start moment of the DRX inactivity timer.

That is, in case that the NB-IoT or eMTC terminal is configured with multiple DL HARQ processes, then after receiving the new DL/UL transmission indicated by the PDCCH, the NB-IoT or eMTC terminal may start the DRX inactivity timer after the first duration. The network device can send the PDCCH to the IoT terminal at the start moment of the DRX inactivity timer or after the DRX inactivity timer is started, thereby ensuring that the IoT terminal can reliably monitor the PDCCH.

It should be noted that in the present disclosure, after determining the start moment of the DRX inactivity timer in the IoT terminal, the network device can send the PDCCH based on this moment. For example, the network device starts to send the PDCCH at the start moment of the DRX inactivity timer, or the network device starts to send the PDCCH after the start moment of the DRX inactivity timer. This ensures that when performing the PDCCH monitoring based on the DRX inactivity timer, the IoT terminal can reliably monitor the PDCCH.

In the present disclosure, the network device determines the start moment of the DRX inactivity timer in the IoT terminal according to the transmission time information of the PDSCH, PUSCH or PDCCH and the first duration, and then transmits the PDCCH. This ensures that the IoT terminal that performs the PDCCH monitoring based on the start of the DRX inactivity timer can reliably monitor the PDCCH, thereby improving the reliability of the IoT communication system.

Reference is made to FIG. 6, which is a schematic flowchart of another method for starting a timer provided in an embodiment of the present disclosure. The method provided in this embodiment is performed by a network device. As shown in FIG. 6, the method may include, but is not limited to, the following steps.

At step 601, a first duration is determined according to a first parameter value.

The first parameter value is a numerical value used to determine the start moment of the DRX inactivity timer in an auxiliary IoT terminal. The first parameter value may be any numerical value that ensures that the IoT terminal can reliably monitor the PDCCH after the start moment of the DRX inactivity timer in the IoT terminal is delayed by the first duration determined based on the first parameter value. The first parameter value may be a fixed value, such as 12ms; or the first parameter value may be any value within a certain value range, for example, the first parameter value is any value in {0, 1, 2, 2.8, 3, 3.6, 4, ..., 13}, which is not limited in the present disclosure.

Optionally, the first duration may be the same as the first parameter value, or the first duration may have a fixed relationship with the first parameter value, for example, the first duration is 1.5 times, 2 times, or the like as large as the first parameter value, which is not limited in the present disclosure.

Optionally, the network device and the IoT terminal may determine the first parameter value according to a protocol agreement, respectively. Alternatively, the network device may also send the determined first parameter value to the IoT terminal.

For example, the network device may send the first parameter value to the IoT terminal via a broadcast message or an RRC message, which is not limited in the present disclosure.

At step 602, a start moment of a DRX inactivity timer in the IoT terminal is determined according to transmission time information of a PDSCH, PUSCH, or PDCCH and the first duration.

At step 603, a PDCCH is sent to the IoT terminal according to the start moment of the DRX inactivity timer in the IoT terminal.

Optionally, the network device may start sending the PDCCH to the IoT terminal at the start moment of the DRX inactivity timer in the IoT terminal; or the network device may start sending the PDCCH to the IoT terminal at a certain moment after the start moment of the DRX inactivity timer in the IoT terminal, such as at the 1ms, 2ms, or the like after the start moment of the DRX inactivity timer, which is not limited in the present disclosure.

Concerning the specific implementation of the above steps 602 to 603, reference may be made to the detailed description of any embodiment in the present disclosure, which will not be repeated here.

In the present disclosure, the network device first determines the first duration according to the first parameter value, and then determines the start moment of the DRX inactivity timer in the IoT terminal according to the transmission time information of the PDSCH, PUSCH or PDCCH and the first duration, and then transmits the PDCCH. This ensures that the IoT terminal that performs the PDCCH monitoring based on the start of the DRX inactivity timer can reliably monitor the PDCCH, thereby improving the reliability of the IoT communication system.

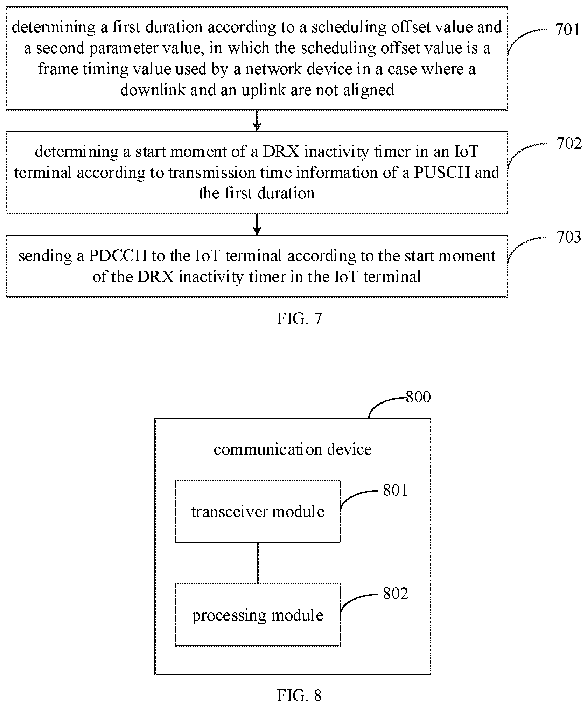

Reference is made to FIG. 7, which is a schematic flowchart of a method for starting a timer provided in an embodiment of the present disclosure. The method provided in this embodiment may be performed by a network device. As shown in FIG. 7, the method may include, but is not limited to, the following steps.

At step 701, a first duration is determined according to a scheduling offset value and a second parameter value, in which the scheduling offset value is a frame timing value used by the network device in a case where a downlink and an uplink are not aligned.

Optionally, the scheduling offset value may be a Kmac parameter in RRC configuration parameters.

The second parameter value is a value used to determine the start moment of the DRX inactivity timer in an auxiliary IoT terminal together with the scheduling offset value. The second parameter value may be any value that ensures that the IoT terminal can reliably monitor the PDCCH after the start moment of the DRX inactivity timer is delayed by the first duration determined based on the second parameter value and the scheduling offset value. The second parameter value may be a fixed value, such as 3; or the second parameter value may be any value within a certain value range, for example, the second parameter value may be any value in {0, 1, 1.5, 2, 2.8, 3, 4, ...}, which is not limited in the present disclosure.

Optionally, the first duration = the scheduling offset value + the second parameter value.

In some possible implementations, in case that the value of the scheduling offset value + the second parameter value is a non-integer, then the first duration may also be a value obtained by rounding up or down the value of "the scheduling offset value + the second parameter value". In order to avoid as much as possible that the start moment of the DRX inactivity timer is earlier than the start moment of sending the PDCCH by the network device, in the present disclosure, the value of "the scheduling offset value + the second parameter value" rounded up may be determined as the first duration. For example, in case that the scheduling offset value + the second parameter value = 3.5, then the first duration may be determined to be 4.

Optionally, the network device and the IoT terminal may determine the second parameter value according to a protocol agreement, respectively, or the network device may also send the second parameter value to the IoT terminal, which is not limited in the present disclosure.

Optionally, the network device may send the scheduling offset value to the IoT terminal. This enables the IoT terminal to determine the first duration based on the scheduling offset value and the second parameter value.

In some possible embodiments, the IoT terminal may receive the scheduling offset value sent by the network device via an RRC message, which is not limited in the present disclosure.

At step 702, a start moment of a DRX inactivity timer in the IoT terminal is determined according to transmission time information of a PUSCH and the first duration.

At step 703, a PDCCH is sent to the IoT terminal according to the start moment of the DRX inactivity timer in the IoT terminal.

Concerning the specific implementation of the above steps 702 to 703, reference may be made to the detailed description of any embodiment in the present disclosure, which will not be repeated here.

It should be noted that since the scheduling offset value is the frame timing value determined by the network device after receiving the uplink data, the network device can determine the start moment of the DRX inactivity timer in the IoT terminal after the PUSCH transmission based on the first duration determined according to the scheduling offset value.

That is, in case that the network device has sent the scheduling offset value to the IoT terminal, it may be determined that the IoT terminal will start the DRX inactivity timer after the first duration after the transmission of a frame where the last repetition in multiple repetitions of the PUSCH transmission is located, to monitor the PDCCH. The network device can then start sending the PDCCH to the IoT terminal at the start moment of the DRX inactivity timer or at a certain moment after the start moment.

In the present disclosure, the network device first determines the first duration according to the scheduling offset value and the second parameter value, and then determines the start moment of the DRX inactivity timer in the IoT terminal according to the transmission time information of the PUSCH and the first duration, and then transmits the PDCCH. This ensures that the IoT terminal that performs the PDCCH monitoring based on the start of the DRX inactivity timer can reliably monitor the PDCCH, thereby improving the reliability of the IoT communication system.

Reference is made to FIG. 8, which is a schematic block diagram of a communication device provided in an embodiment of the present disclosure. The communication device 800 shown in FIG. 8 may include a transceiver module 801 and a processing module 802. The transceiver module 801 may include a sending module and/or a receiving module. The sending module is configured to implement a sending function, and the receiving module is configured to implement a receiving function. The transceiver module 801 may implement a sending function and/or a receiving function.

It should be understood that the communication device 800 may be an IoT terminal, or an apparatus in an IoT terminal, or an apparatus that may be used in conjunction with an IoT terminal. Alternatively, the communication device 800 may be a network device, or an apparatus in a network device, or an apparatus that may be used in conjunction with a network device.

When the communication device 800 is at an IoT terminal, the following applies.

The processing module 802 is configured to determine a start moment of a DRX inactivity timer according to a first duration and transmission time information of a PDSCH, PUSCH, or PDCCH, and the processing module 802 is further configured to start the DRX inactivity timer at the start moment.

Optionally, the processing module 802 is further configured to determine, as the start moment of the DRX inactivity timer, a moment after the first duration has passed after a subframe occupied by a last repetition in multiple repetitions of a PDSCH transmission is received in a case where the IoT terminal is configured with one downlink (DL) hybrid automatic repeat request (HARQ) process and an HARQ feedback is disabled; or determine, as the start moment of the DRX inactivity timer, a moment after the first duration has passed after a subframe occupied by a last repetition in multiple repetitions of a PUSCH transmission is sent in a case where the IoT terminal is configured with one uplink (UL) HARQ process and the UL HARQ is in a first mode.

That is, the processing module 802 is further configured to determine, as the start moment of the DRX inactivity timer, a moment after the first duration has passed after a subframe occupied by a last retransmission in multiple retransmissions of a PDSCH transmission is received in a case where the IoT terminal is configured with one DL HARQ process and an HARQ feedback is disabled; or determine, as the start moment of the DRX inactivity timer, a moment after the first duration has passed after a subframe occupied by a last retransmission in multiple retransmissions of a PUSCH transmission is sent in a case where the IoT terminal is configured with one UL HARQ process and the UL HARQ is in a first mode.

Optionally, the processing module 802 is further configured to determine, as the start moment of the DRX inactivity timer, a moment after the first duration has passed after a new DL transmission indicated by the PDCCH is received in a case where the IoT terminal is configured with multiple DL HARQ processes; or determine, as the start moment of the DRX inactivity timer, a moment after the first duration has passed after a new UL transmission indicated by the PDCCH is received in a case where the IoT terminal is configured with multiple UL HARQ processes.

Optionally, the processing module 802 is further configured to determine the first duration according to a first parameter value; or determine the first duration according to a scheduling offset value and a second parameter value, in which the scheduling offset value is a frame timing value used by a network device in a case where a downlink and an uplink are not aligned.

Optionally, the transceiver module 801 is configured to receive the scheduling offset value sent by the network device.

Optionally, the processing module 802 is further configured to determine the first parameter value or the second parameter value according to a protocol agreement; or determine the first parameter value or the second parameter value according to an indication of the network device.

In the present disclosure, the IoT terminal determines the start moment of the DRX inactivity timer according to the transmission time information of the PDSCH, PUSCH or PDCCH and the first duration, and then starts the DRX inactivity timer at the start moment. Therefore, by configuring the start moment of the DRX inactivity timer to overlap with the start moment of monitoring the PDCCH as much as possible, it is ensured that the IoT terminal can reliably monitor the PDCCH, thereby improving the reliability of the IoT communication system.

When the communication device 800 is at a network device, the following applies.

The processing module 802 is configured to determine a start moment of a DRX inactivity timer in an IoT terminal according to a first duration and transmission time information of a PDSCH, PUSCH, or a PDCCH.

Optionally, the processing module 802 is further configured to determine, as the start moment of the DRX inactivity timer, a moment after the first duration has passed after a subframe occupied by a last repetition in multiple repetitions of a PDSCH transmission is received by the IoT terminal in a case where the IoT terminal is configured with one downlink (DL) hybrid automatic repeat request (HARQ) process and an HARQ feedback is disabled; or determine, as the start moment of the DRX inactivity timer, a moment after the first duration has passed after a subframe occupied by a last repetition in multiple repetitions of a PUSCH transmission is sent by the IoT terminal in a case where the IoT terminal is configured with one uplink (UL) HARQ process and the UL HARQ is in a first mode.

That is, the processing module 802 is further configured to determine, as the start moment of the DRX inactivity timer, a moment after the first duration has passed after a subframe occupied by a last retransmission in multiple retransmissions of a PDSCH transmission is received by the IoT terminal in a case where the IoT terminal is configured with one DL HARQ process and an HARQ feedback is disabled; or determine, as the start moment of the DRX inactivity timer, a moment after the first duration has passed after a subframe occupied by a last retransmission in multiple retransmissions of a PUSCH transmission is sent by the IoT terminal in a case where the IoT terminal is configured with one UL HARQ process and the UL HARQ is in a first mode.

Optionally, the processing module 802 is further configured to determine, as the start moment of the DRX inactivity timer, a moment after the first duration has passed after a new DL transmission indicated by the PDCCH is received by the IoT terminal in a case where the IoT terminal is configured with multiple DL HARQ processes; or determine, as the start moment of the DRX inactivity timer, a moment after the first duration has passed after a new UL transmission indicated by the PDCCH is received by the IoT terminal in a case where the IoT terminal is configured with multiple UL HARQ processes.

Optionally, the processing module 802 is further configured to determine the first duration according to a first parameter value; or determine the first duration according to a scheduling offset value and a second parameter value, in which the scheduling offset value is a frame timing value used by the network device in a case where a downlink and an uplink are not aligned.

Optionally, the transceiver module 801 is configured to send the scheduling offset value to the IoT terminal.

Optionally, the processing module 802 is further configured to determine the first parameter value or the second parameter value according to a protocol agreement; and/or the transceiver module 801 is further configured to send the first parameter value or the second parameter value to the IoT terminal.

In the present disclosure, the network device determines the start moment of the DRX inactivity timer in the IoT terminal according to the transmission time information of the PDSCH, PUSCH or PDCCH and the first duration, and then transmits the PDCCH. This ensures that the IoT terminal that performs the PDCCH monitoring based on the start of the DRX inactivity timer can reliably monitor the PDCCH, thereby improving the reliability of the IoT communication system.

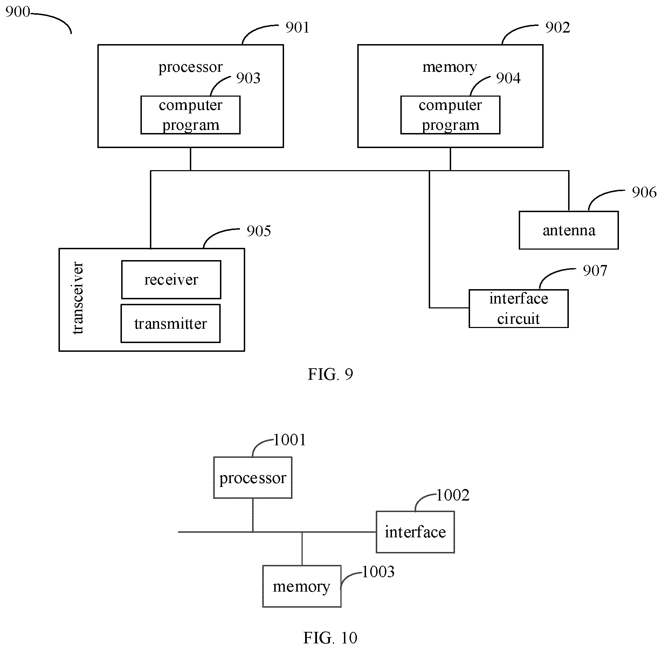

Reference is made to FIG. 9, which is a schematic block diagram of another communication device provided in an embodiment of the present disclosure. The communication device 900 may be an IoT terminal, or may be a chip, a chip system, or a processor supporting the IoT terminal to implement the above-mentioned methods. Alternatively, the communication device 900 may be a network device, or may be a chip, a chip system, or a processor supporting the network device to implement the above-mentioned methods. The communication device 900 may be configured to implement the methods as described in the above-mentioned method embodiments. For details, reference may be made to the description in the above-mentioned method embodiments.

The communication device 900 may include one or more processors 901. The processor 901 may be a general-purpose processor, a special-purpose processor, or the like. The processor 901 may be, for example, a baseband processor or a central processor. The baseband processor may be configured to process a communication protocol and communication data, and the central processor may be configured to control a communication device (such as a base station, a baseband chip, a terminal, a terminal chip, a DU, a CU, or the like), execute a computer program, and process data of the computer program.

Optionally, the communication device 900 may further include one or more memories 902 on which a computer program 904 may be stored, and the processor 901 is configured to execute the computer program 904 to cause the communication device 900 to perform the methods as described in the above-mentioned method embodiments. Optionally, the memory 902 may also have data stored therein. The communication device 900 and the memory 902 may be provided independently or integrated together.

Optionally, the communication device 900 may further include a transceiver 905 and an antenna 906. The transceiver 905 may be referred to as a transceiving unit, a transceiving device, a transceiving circuit or the like for implementing a transceiving function. The transceiver 905 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device 900 may further include one or more interface circuits 907. The interface circuit 907 is configured to receive and transmit code instructions to the processor 901. The processor 901 is configured to run the code instructions to enable the communication device 900 to perform the methods described in the above-mentioned method embodiments.

The transceiver 905 in the communication device 900 may be configured to execute the transceiving steps in the above drawings, and the processor 901 may be configured to execute the processing steps in the above drawings.

In an implementation, the processor 901 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 901 may have stored therein the computer program 903 that, when running on the processor 901, enables the communication device 900 to perform the methods described in the above-mentioned method embodiments. The computer program 903 may be embedded in the processor 901, in which case the processor 901 may be implemented by hardware.

In an implementation, the communication device 900 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), etc.

The communication device described in the above embodiments may be a network device or a smart relay, but the scope of the communication device described in the present disclosure is not limited thereto. The structure of the communication device may not be limited by FIG. 9. The communication device may be a stand-alone device or may be part of a larger device. For example, the communication device may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

For the case where the communication device may be a chip or a chip system, reference may be made to the schematic block diagram of the chip shown in FIG. 10. The chip shown in FIG. 10 includes a processor 1001 and an interface 1002. The number of processors 1001 may be one or more, and the number of interfaces 1002 may be multiple.

For the case where the chip is configured to implement the functions of the terminal in the embodiments of the present disclosure, the following applies.

Optionally, the chip further includes a memory 1003 for storing desired computer programs and data.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of embodiments of the present disclosure.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In the embodiments of the present disclosure, for a certain kind of technical features, the technical features in this kind of technical features are distinguished by terms like "first", "second", "third", "A", "B", "C", "D", etc., and these technical features described with the terms "first", "second", "third", "A", "B", "C" and "D" have no order of precedence or size.

The corresponding relationships shown in the tables in the present disclosure may be configured or predefined. The values of the information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, etc. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. A method for starting a timer, performed by an Internet of Things (IoT) terminal and comprising:
determining a start moment of a discontinuous transmission (DRX) inactivity timer according to a first duration and transmission time information of a physical downlink shared channel (PDSCH), a physical uplink shared channel (PUSCH), or a physical downlink control channel (PDCCH); and
starting the DRX inactivity timer at the start moment.

2. The method according to claim 1, wherein determining the start moment of the DRX inactivity timer according to the first duration and the transmission time information of the PDSCH, the PUSCH, or the PDCCH comprises:
determining, as the start moment of the DRX inactivity timer, a moment after the first duration has passed after a subframe occupied by a last repetition in multiple repetitions of a PDSCH transmission is received in a case where the IoT terminal is configured with one downlink (DL) hybrid automatic repeat request (HARQ) process and an HARQ feedback is disabled; or
determining, as the start moment of the DRX inactivity timer, a moment after the first duration has passed after a subframe occupied by a last repetition in multiple repetitions of a PUSCH transmission is sent in a case where the IoT terminal is configured with one uplink (UL) HARQ process and the UL HARQ is in a first mode.

3. The method according to claim 1, wherein determining the start moment of the DRX inactivity timer according to the first duration and the transmission time information of the PDSCH, the PUSCH, or the PDCCH comprises:
determining, as the start moment of the DRX inactivity timer, a moment after the first duration has passed after a new DL transmission indicated by the PDCCH is received in a case where the IoT terminal is configured with multiple DL HARQ processes; or
determining, as the start moment of the DRX inactivity timer, a moment after the first duration has passed after a new UL transmission indicated by the PDCCH is received in a case where the IoT terminal is configured with multiple UL HARQ processes.

4. The method according to any one of claims 1 to 3, further comprising:
determining the first duration according to a first parameter value; or
determining the first duration according to a scheduling offset value and a second parameter value, wherein the scheduling offset value is a frame timing value used by a network device in a case where a downlink and an uplink are not aligned.

5. The method according to claim 4, further comprising:
receiving the scheduling offset value sent by the network device.

6. The method according to claim 4, further comprising:
determining the first parameter value or the second parameter value according to a protocol agreement; or
determining the first parameter value or the second parameter value according to an indication of the network device.

7. A method for starting a timer, performed by a network device and comprising:
determining a start moment of a discontinuous transmission (DRX) inactivity timer in an Internet of Things (IoT) terminal according to a first duration and transmission time information of a physical downlink shared channel (PDSCH), a physical uplink shared channel (PUSCH), or a physical downlink control channel (PDCCH).

8. The method according to claim 7, wherein determining the start moment of the DRX inactivity timer in the IoT terminal according to the first duration and the transmission time information of the PDSCH, the PUSCH, or the PDCCH comprises:
determining, as the start moment of the DRX inactivity timer, a moment after the first duration has passed after a subframe occupied by a last repetition in multiple repetitions of a PDSCH transmission is received by the IoT terminal in a case where the IoT terminal is configured with one downlink (DL) hybrid automatic repeat request (HARQ) process and an HARQ feedback is disabled; or
determining, as the start moment of the DRX inactivity timer, a moment after the first duration has passed after a subframe occupied by a last repetition in multiple repetitions of a PUSCH transmission is sent by the IoT terminal in a case where the IoT terminal is configured with one uplink (UL) HARQ process and the UL HARQ is in a first mode.

9. The method according to claim 7, wherein determining the start moment of the DRX inactivity timer in the IoT terminal according to the first duration and the transmission time information of the PDSCH, the PUSCH, or the PDCCH comprises:
determining, as the start moment of the DRX inactivity timer, a moment after the first duration has passed after a new DL transmission indicated by the PDCCH is received by the IoT terminal in a case where the IoT terminal is configured with multiple DL HARQ processes; or
determining, as the start moment of the DRX inactivity timer, a moment after the first duration has passed after a new UL transmission indicated by the PDCCH is received by the IoT terminal in a case where the IoT terminal is configured with multiple UL HARQ processes.

10. The method according to any one of claims 7 to 9, further comprising:
determining the first duration according to a first parameter value; or
determining the first duration according to a scheduling offset value and a second parameter value, wherein the scheduling offset value is a frame timing value used by the network device in a case where a downlink and an uplink are not aligned.

11. The method according to claim 10, further comprising:
sending the scheduling offset value to the IoT terminal.

12. The method according to claim 10, further comprising:
determining the first parameter value or the second parameter value according to a protocol agreement; and/or
sending the first parameter value or the second parameter value to the IoT terminal.

13. A communication device, comprising:
a processing module configured to determine a start moment of a discontinuous transmission (DRX) inactivity timer according to a first duration and transmission time information of a physical downlink shared channel (PDSCH), a physical uplink shared channel (PUSCH), or a physical downlink control channel (PDCCH);
wherein the processing module is further configured to start the DRX inactivity timer at the start moment.

14. A communication device, comprising:
a processing module configured to determine a start moment of a discontinuous transmission (DRX) inactivity timer in an Internet of Things (IoT) terminal according to a first duration and transmission time information of a physical downlink shared channel (PDSCH), a physical uplink shared channel (PUSCH), or a physical downlink control channel (PDCCH).

15. A communication device, comprising:
a processor; and
a memory having stored therein a computer program,
wherein the processor executes the computer program stored in the memory, so that the communication device performs the method according to any one of claims 1 to 6 or any one of claims 7 to 12.

16. A communication device, comprising:
a processor; and
an interface circuit configured to receive code instructions and transmit the code instructions to the processor,
wherein the processor is configured to run the code instructions to perform the method according to any one of claims 1 to 6 or any one of claims 7 to 12.

17. A communication system, comprising:
an Internet of Things (IoT) terminal configured to execute the method according to any one of claims 1 to 6; and
a network device configured to execute the method according to any one of claims 7 to 12.

18. A computer-readable storage medium for storing instructions that, when executed, cause the method according to any one of claims 1 to 6 or any one of claims 7 to 12 to be implemented.
